# EUROPÄISCHE PATENTSCHRIFT

(11) **EP 3 465 195 B1**
(45) Veröffentlichungstag und Bekanntmachung des Hinweises auf die Patenterteilung: **12.10.2022**
(21) Anmeldenummer: 17722424.3
(22) Anmeldetag: 08.05.2017
(51) Int. Cl.: G01N 27/417, G01N 27/419, F01N 11/00

(54) **VERFAHREN ZUR DYNAMIKÜBERWACHUNG EINES NOX-SENSORS**
METHOD FOR THE DYNAMIC MONITORING OF A NOX SENSOR
PROCÉDÉ DE SURVEILLANCE DE LA DYNAMIQUE D'UN CAPTEUR DE NOX

(30) Priorität: 06.06.2016 DE 102016209924
(43) Veröffentlichungstag der Anmeldung: 10.04.2019
(73) Patentinhaber: Robert Bosch GmbH, 70442 Stuttgart (DE)
(72) Erfinder: HANDLER, Torsten, 70435 Stuttgart (DE); KNOEFLER, Eckehard, 71672 Marbach (DE)
(86) Internationale Anmeldenummer: PCT/EP2017/060901
(87) Internationale Veröffentlichungsnummer: WO 2017/211521

(56) Entgegenhaltungen:
- EP-A1- 2 587 255
- DE-A1- 10 244 125
- DE-A1-102010 042 701
- DE-A1-102012 205 464
- DE-B3-102004 016 986
- DE-B4- 10 244 125
- DE-B4-102012 205 464
- FR-A1- 2 844 880
- US-A1- 2012 097 553
- US-A1- 2012 255 277
- US-A1- 2013 062 200

## Beschreibung

Die vorliegende Erfindung betrifft ein Verfahren zur Überwachung eines NOx-Sensors mit einem sauerstoffionenleitenden Festelektrolyten und wenigstens einem Hohlraum (Messkammer). Weiterhin betrifft die Erfindung ein Computerprogramm zur Durchführung des Verfahrens sowie ein maschinenlesbares Speichermedium und ein elektronisches Steuergerät, die zur Durchführung des Verfahrens eingerichtet sind.

### Stand der Technik

Zur Messung der NOx-Konzentration in einem Messgas, beispielsweise in dem Abgas einer Brennkraftmaschine, sind NOx-Sensoren (NOx-Messsonden) bekannt, die auf dem Nernst-Prinzip basieren. Beispielsweise geht aus der deutschen Offenlegungsschrift DE 103 12 732 A1 eine NOx-Messsonde hervor, bei der in einer ersten Kavität, die vom Abgas durch eine Diffusionsbarriere getrennt ist, die Sauerstoffkonzentration durch einen ersten Pumpstrom erniedrigt wird. In einer zweiten Kavität, die von der ersten Kavität durch eine Diffusionsbarriere getrennt ist, wird die Sauerstoffkonzentration durch einen zweiten Pumpstrom weiter erniedrigt. An einer Messelektrode in der zweiten Kavität werden die im Gas enthaltenen Stickoxide zersetzt. Der hierbei freiwerdende Sauerstoff wird mit einem dritten Pumpstrom zu einer Außenelektrode transportiert und ist dabei ein Maß für die NOx-Konzentration in der zweiten Kavität und damit auch in dem zu messenden Abgas.

Da es sich bei einem NOx-Sensor um eine abgasrelevante Komponente handelt, ist vom Gesetzgeber eine Überwachung des NOx-Sensors vorgeschrieben. Zur Überwachung von NOx-Sensoren ist bereits eine sogenannte NOx-Sensoreigendiagnose bekannt. Hierbei wird eine Messkammer des NOx-Sensors mit einer definierten Sauerstoffkonzentration geflutet, beispielsweise durch Absenkung der Nernstspannung des Sensors. Der Sauerstoff wird dann an der Messelektrode (NOx-Elektrode) umgesetzt. Der resultierende Pumpstromverlauf wird gemessen und kann für die Eigendiagnose ausgewertet werden, indem ein Integral des resultierenden Pumpstroms mit einem Referenzwert, z.B. mit einem Referenzwert, der bei dem Sensor als Neuteil gemessen wurde, verglichen wird. Diese NOx-Sensoreigendiagnose wird auch als NOx-Zellenstatusüberwachung bezeichnet.

Neben der Detektion einer Kennliniendrift eines NOx-Sensors muss auch die Dynamik des NOx-Signals überwacht werden. Wenn allerdings ein solcher NOx-Sensor stromabwärts eines SCR-Katalysators angeordnet ist, ist eine DynamikÜberwachung des NOx-Signals nicht mehr möglich, da bei den gegebenen strengen Grenzwerten für NOx keine nennenswerten NOx-Emissionen stromabwärts eines SCR-Katalysators auftreten.

Bei einer Einbaulage des NOx-Sensors beispielsweise nach einem Abgasturbolader oder nach einem Dieseloxidationskatalysator und/oder einem Dieselpartikelfilter, in denen kein NOx umgesetzt wird, sind im Prinzip zwei Verfahren zur Dynamiküberwachung des NOx-Sensors bekannt. Bei einem ersten Verfahren wird bei einem Übergang von einem Lastbetrieb in einen Schubbetrieb der Gradient des NOx-Signals bewertet. In einem aktuelleren, zweiten Verfahren werden die hochfrequenten Anteile eines NOx-Modells mit den Sensordaten unter dynamischen Bedingungen verglichen. Voraussetzung für die Durchführung des zweiten Verfahrens ist das Vorhandensein eines dynamischen NOx-Rohemissionsmodells.

Moderne Abgasnachbehandlungssysteme basieren oftmals auf einer Kombination eines Stickoxid-Speicherkatalysators (NSC) und einem SCR-Katalysator. In der Regel ist dabei ein erster NOx-Sensor stromabwärts des NSC und ein zweiter NOx-Sensor stromabwärts des SCR-Katalysators angeordnet. Da im NSC NOx umgesetzt wird und es für die Position stromabwärts des NSC kein NOx-Modell gibt, ist der erste NOx-Sensor zwischen dem NSC und dem SCR-Katalysator erforderlich, um ein NOx-Konzentrationssignal generieren zu können, das für eine Vorsteuerung der Reduktionsmitteldosiermenge für den SCR-Katalysator notwendig ist. Da aber ein genaues und dynamisches NOx-Modell zur Bestimmung der NOx-Konzentration stromabwärts des NSC nicht existiert, ist das oben beschriebene Verfahren zur Dynamiküberwachung, das eine solches dynamisches NOx-Emissionsmodell erfordert, nicht möglich.

DE 102 44 125 A1 beschreibt ein Verfahren zur Bewertung des Zeitverhaltens eines NOx-Sensors, bei dem in bekanntem zeitlichen Abstand mindestens zwei Werte des Sensorsignals abgetastet würde und daraus eine Zeitkonstante ermittelt wird. Die den Messungen zugrunde liegenden Änderungen der Sauerstoffkonzentration basieren auf Konzentrationsänderungen im Abgas der Brennkraftmaschine, indem beispielsweise eine Schubabschaltung aktiviert wird oder eine Volllastanreicherung geschaltet wird.

DE 10 2010 042 701 A1 befasst sich mit einem NOx-Sensor zur Vermessung und/oder Kalibrierung des Sensors. Hierfür werden zunächst zu bestimmende Gaskomponenten und/oder Sauerstoff durch elektrochemische Pumpvorgänge aus einer Kammer des Sensors entfernt. In einem weiteren Schritt wird Sauerstoff durch elektrochemische Pumpvorgänge gezielt in eine Kammer des Sensors eingebracht und die hierdurch verursachten Veränderungen werden gemessen.

EP 2 587 255 A1 schlägt für eine Diagnose eines NOx-Sensors eine Unregelmäßigkeits-Diagnose-Vorrichtung vor, die verschiedene Unregelmäßigkeiten des NOx-Sensors erfassen kann.

DE 10 2012 205 464 A1 befasst sich mit einem Verfahren zur Diagnose von Fahrzeug-NOx-Sensorfehlern, wobei das Ansprechverhalten und/oder die Genauigkeit von NOx-Sensoren unter Verwendung des von derartigen Sensoren erzeugten Ausgangs diagnostiziert werden.

### Offenbarung der Erfindung

### Vorteile der Erfindung

Die vorliegende Erfindung stellt ein Verfahren zur Überwachung und insbesondere zur Dynamiküberwachung eines NOx-Sensors bereit, das insbesondere auch in solchen Fällen mit Vorteil zum Einsatz kommen kann, in denen herkömmliche Verfahren nicht eingesetzt werden können. Das Verfahren geht von einem NOx-Sensor aus, der auf einem sauerstoffionenleitenden Festelektrolyten basiert. Der NOx-Sensor ist beispielsweise mit einem Schichtaufbau so ausgestaltet, dass er wenigstens einen Hohlraum (Messkammer) aufweist. Beispielsweise sind zwei Hohlräume (erster Hohlraum und zweiter Hohlraum als Messkammer) und ein Referenzgasraum vorgesehen. Durch geeignete Anordnung von verschiedenen Elektroden, beispielsweise wenigstens einer Innenelektrode (innere Pumpelektrode) und wenigstens einer Außenelektrode (äußere Pumpelektrode) sowie einer Referenzelektrode und einer Messelektrode (NOx-Pumpelektrode) und entsprechender Gegenelektroden, erfolgt eine Messung der NOx-Konzentration in einem Messgas, wobei die Anordnung der Elektroden vorzugsweise eine Sauerstoffpumpzelle und eine Nernstzelle, vergleichbar mit Breitbandlambdasonden, bilden. Darüber hinaus ist eine NOx-Pumpzelle als dritte Zelle vorgesehen. Für die reguläre Messung wird vorzugsweise durch Anlegen von Pumpströmen die Sauerstoffkonzentration in einer ersten Hohlkammer erniedrigt. An einer Messelektrode in der zweiten Hohlkammer (Messkammer), die durch eine Diffusionsbarriere von dem ersten Hohlraum getrennt ist, erfolgt eine Zersetzung von NO, wobei der hierbei freiwerdende Sauerstoff mittels eines weiteren Pumpstroms aus dem entsprechenden Hohlraum (Messkammer) herausgepumpt wird. Dieser Pumpstrom ist ein Maß für die NOx-Konzentration. Während einer Eigendiagnose des NOx-Sensors wird ein Hohlraum des NOx-Sensors, und zwar der zweite Hohlraum (Messkammer), mit einer definierten Sauerstoffkonzentration geflutet. Erfindungsgemäß wird hierbei der zeitliche Verlauf des resultierenden NOx-Pumpstroms ausgewertet. Bei einer Abweichung von wenigstens einer Größe, die diesen zeitlichen Verlauf des Pumpstroms repräsentiert, im Vergleich mit Referenzwerten wird auf eine gegebenenfalls vorhandene beeinträchtigte Dynamik des NOx-Sensors geschlossen. Anders gesagt wird also der Pumpstrom, der aus der Flutung mit Sauerstoff und der sich daraus ergebenden definierten Sauerstoffkonzentration in der Messkammer des Sensors resultiert, derart ausgewertet, dass der zeitliche Verlauf des NOx-Pumpstroms betrachtet wird. Bisher bekannte Verfahren werten immer ein Gesamtintegral von NOx bei der Eigendiagnose aus. Bei einer Auswertung des zeitlichen Verlaufs im Vergleich mit Referenzwerten oder Erwartungswerten kann bei einer vorliegenden Abweichung auf eine beeinträchtigte Dynamik des NOx-Sensors geschlossen werden. Herkömmliche Verfahren mit einer Auswertung des Gesamtintegrals des resultierenden Pumpstroms erlauben hingegen nur eine Aussage im Hinblick auf die Gesamtsensitivität des Sensors, nicht aber im Hinblick auf die Dynamik.

Bei der Durchführung des erfindungsgemäßen Verfahrens wird beispielsweise zu Beginn der Eigendiagnose die Hohlkammer (Messkammer) durch Absenkung der Nernstspannung beispielsweise auf ca. 225 mV mit einer definierten Sauerstoffkonzentration geflutet. Der Sauerstoff wird an der NOx-Elektrode umgesetzt, sodass ein bestimmter Pumpstrom resultiert. Aufgrund der schnellen Erhöhung der Sauerstoffkonzentration in dem Hohlraum ist zu erwarten, dass der resultierende Pumpstrom ebenfalls stark und schnell ansteigt. Wenn allerdings beispielsweise eine Schädigung der NOx-Elektrode oder einer entsprechenden Diffusionsbarriere im Sensor vorliegt, verzögert sich die Reaktion des NOx-Sensors und der resultierende Pumpstrom steigt weniger schnell an. Dies wird erfindungsgemäß mittels einer Auswertung des zeitlichen Verlaufs des NOx-Pumpstroms während der Eigendiagnose detektiert.

Erfindungsgemäß kann der zeitliche Verlauf des Pumpstroms durch Betrachtung einer Größe, die den Gradienten des ansteigenden Pumpstroms während der Eigendiagnose repräsentiert, ausgewertet werden. Alternativ oder zusätzlich ist es auch möglich, dass der Gradient des abfallenden Pumpstroms während der Eigendiagnose ausgewertet wird. Der abfallende Pumpstrom tritt am Ende der Eigendiagnose bzw. nach Beendigung der Flutung des Hohlraums mit Sauerstoff auf. Im Prinzip kann also eine Bewertung des zeitlichen Signalverlaufs in beide Richtungen erfolgen, nach oben während des Starts der Eigendiagnose und nach unten am Ende der Eigendiagnose, sodass eine beidseitige NOx-Signaldynamiküberwachung, auch in Kombination miteinander, möglich ist.

Bei einer feststellbaren beeinträchtigten Dynamik des NOx-Sensors kann auf eine vergiftete NOx-Elektrode und/oder auf eine versottete NOx-Diffusionsbarriere im NOx-Sensor geschlossen werden.

Vorzugsweise ist der NOx-Sensor, der erfindungsgemäß überwacht wird, zur Anordnung in dem Abgasstrang der Brennkraftmaschine eines Kraftfahrzeugs vorgesehen. Beispielsweise kann der NOx-Sensor stromabwärts eines der Brennkraftmaschine zugeordneten Turboladers und/oder stromabwärts eines Stickoxid-Speicherkatalysators und/oder stromabwärts eines Dieselpartikelfilters und/oder stromaufwärts eines SCR-Katalysators und/oder stromabwärts eines SCR-Katalysators angeordnet sein. Mit besonderem Vorteil kann das erfindungsgemäße Verfahren bei NOx-Sensoren zum Einsatz kommen, die an Einbauorten platziert sind, für die keine dynamischen NOx-Emissionsmodelle existieren. Da an solchen Einbauorten eines NOx-Sensors herkömmliche Verfahren, die mit NOx-Emissionsmodellen zur dynamischen Überwachung arbeiten, nicht eingesetzt werden können, kann das erfindungsgemäße Verfahren für solche NOx-Sensoren mit besonderem Vorteil genutzt werden. Das erfindungsgemäße Verfahren ist dabei insbesondere für die Dynamiküberwachung von NOx-Sensoren geeignet, die stromabwärts eines Katalysators angeordnet sind, an dem ein Umsatz von Stickoxiden stattfindet. Beispielsweise kann das erfindungsgemäße Verfahren mit besonderem Vorteil für solche NOx-Sensoren eingesetzt werden, die zwischen einem NSC und einem SCR-Katalysator oder stromabwärts eines SCR-Katalysators angeordnet sind.

Die Erfindung umfasst weiterhin ein Computerprogramm, das zur Durchführung der Schritte des beschriebenen Verfahrens eingerichtet ist. Weiterhin umfasst die Erfindung ein maschinenlesbares Speichermedium, auf welchem ein solches Computerprogramm gespeichert ist, sowie ein elektronisches Steuergerät, das zur Durchführung der Schritte des beschriebenen Verfahrens eingerichtet ist. Die Implementierung des erfindungsgemäßen Verfahrens als Computerprogramm bzw. als maschinenlesbares Speichermedium oder als elektronisches Steuergerät hat den besonderen Vorteil, dass damit die Vorteile des erfindungsgemäßen Verfahrens zur Dynamiküberwachung eines NOx-Sensors auch bei bestehenden Kraftfahrzeugen genutzt werden können.

Weitere Merkmale und Vorteile der Erfindung ergeben sich aus der nachfolgenden Beschreibung von Ausführungsbeispielen in Verbindung mit den Zeichnungen. Hierbei können die einzelnen Merkmale jeweils für sich oder in Kombination miteinander verwirklicht sein.

In den Zeichnungen zeigen:
- Figur 1: schematische Darstellung des Aufbaus eines NOx-Sensors, basierend auf dem Nernst-Prinzip, aus dem Stand der Technik;
- Figur 2: beispielhafter Signalverlauf (NOx und Nernstspannung) bei der Eigendiagnose eines NOx-Sensors gemäß dem Stand der Technik; und
- Figur 3: beispielhafter Signalverlauf bei der erfindungsgemäßen Dynamiküberwachung eines NOx-Sensors.

### Beschreibung von Ausführungsbeispielen

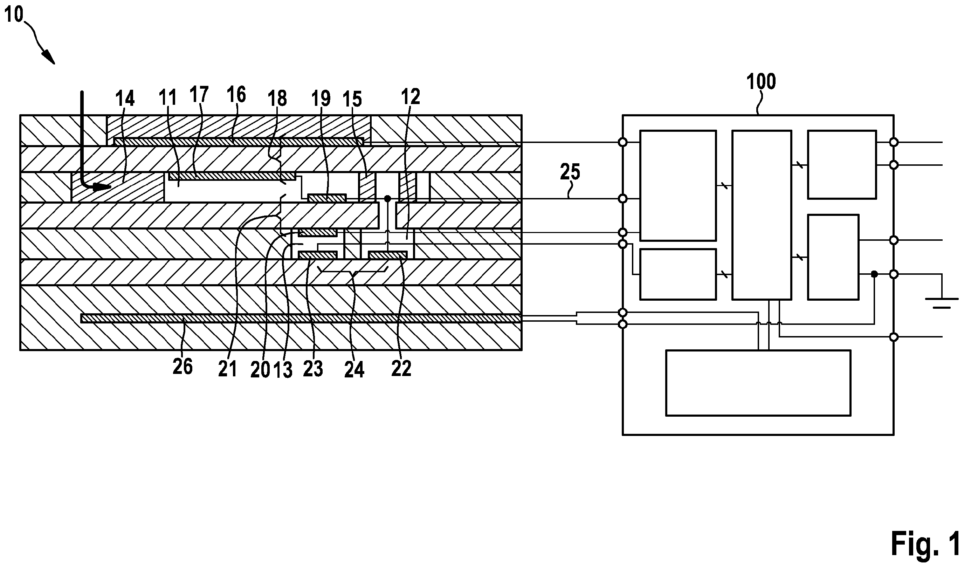

**Fig. 1** illustriert eine beispielhafte Auslegung eines an sich bekannten NOx Sensors 10, der gemäß dem Nernst-Prinzip aufgebaut ist. Der Sensor 10 ist in einem Schichtaufbau auf der Basis eines Sauerstoffionen leitenden Festelektrolyten (Zirkoniumdioxid) und isolierenden Schichten aus Aluminiumoxid realisiert, wobei ein erster Hohlraum 11, ein zweiter Hohlraum (Messkammer) 12 und ein Referenzgasraum 13 vorgesehen ist. Das Abgas strömt in Pfeilrichtung über eine erste Diffusionsbarriere 14 in den ersten Hohlraum 11 ein. Der zweite Hohlraum 12 ist vom ersten Hohlraum 11 über eine zweite Diffusionsbarriere 15 getrennt. Eine dem Abgas ausgesetzte äußere Pumpelektrode (APE) 16 und eine innere Pumpelektrode (IPE) 17 im ersten Hohlraum 11 bilden die Sauerstoffpumpzelle 18. Weiterhin befindet sich im ersten Hohlraum 11 eine Nernst-Elektrode (NE) 19. In dem Referenzgasraum 13 befindet sich die entsprechende Referenzelektrode (RE) 20. Dieses Paar bildet die Nernst-Zelle 21. Im zweiten Hohlraum (Messkammer) 12 ist eine NOx-Pumpelektrode (NOE) 22 angeordnet. Deren Gegenelektrode (NOCE) 23 befindet sich im Referenzgasraum 13. Diese beiden Elektroden bilden die NOx-Pumpzelle 24. Alle Elektroden im ersten und im zweiten Hohlraum 11, 12 weisen einen gemeinsamen Rückleiter (COM) 25 auf. Weiterhin ist ein Heizer 26 für den Sensor 10 vorgesehen.

Der Betrieb des Sensors 10 erfolgt mittels einer Sensor-Kontrolleinheit (SCU) 100 in an sich bekannter Weise. Die innere Pumpelektrode 17 ist beispielsweise durch eine Legierung von Platin mit Gold in ihrer katalytischen Aktivität nur schwach. Die beim herkömmlichen Messbetrieb angelegte Pumpspannung genügt daher nur, um Sauerstoffmoleküle zu spalten (dissoziieren). NO wird bei der eingeregelten Pumpspannung nur wenig dissoziiert und passiert den ersten Hohlraum 11 mit nur geringen Verlusten. NO₂ wird als starkes Oxidationsmittel an der inneren Pumpelektrode 17 unmittelbar in NO umgewandelt. Ammoniak reagiert an der inneren Pumpelektrode 17 in Anwesenheit von Sauerstoff und bei Temperaturen von beispielsweise 650 °C zu NO und Wasser. Aufgrund der höheren Spannung, die an der NOx-Pumpelektrode 22 angelegt wird und durch die Beimengung von beispielsweise Rhodium, durch das die katalytische Aktivität der NOx-Pumpelektrode 22 erhöht wird, wird an der NOx-Pumpelektrode 22 NO vollständig dissoziiert. Der hierbei gebildete Sauerstoff wird durch den Festelektrolyten abgepumpt. Der resultierende Pumpstrom ist ein Maß für die Stickoxide im Abgas.

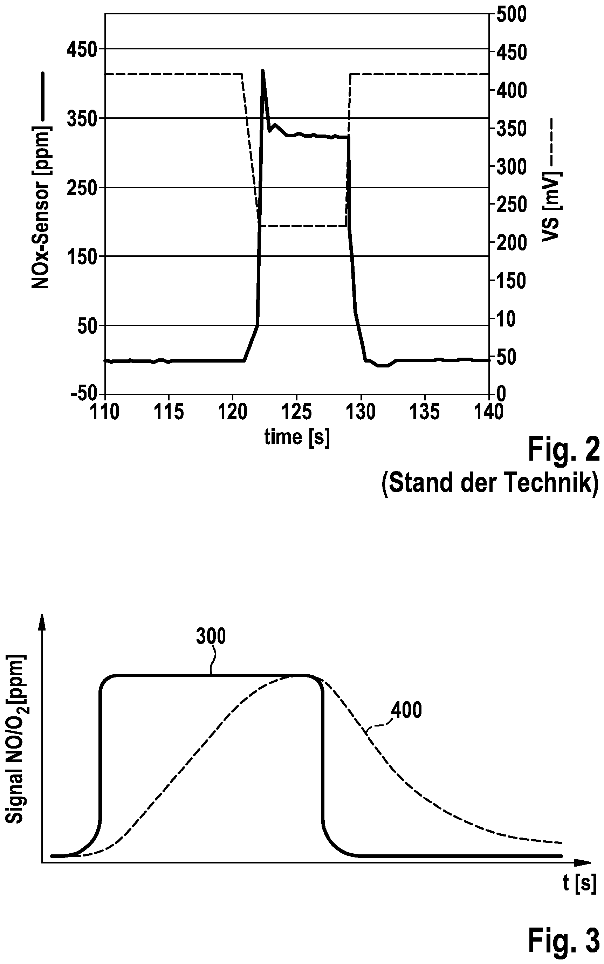

Um insbesondere die OBD-II-Gesetzgebung zu erfüllen, muss ein NOx-Sensor dem Motorsteuergerät verschiedene Diagnosen ermöglichen. Hierbei wird unterschieden zwischen elektrischen Diagnosen, die Kurzschlüsse zwischen den verschiedenen Kontakten zur Masse oder zur Batterie detektieren, und Plausibilisierungen, um den Offset des Sensors (Fehler bei 0 ppm) zu überwachen, und der sogenannten Eigendiagnose (NOx-Zellen-Statusfunktion), die einen möglichen Sensorfehler bei hohen NOx-Konzentrationen detektieren kann. Die Durchführung der an sich bekannten Eigendiagnose wird anhand der **Fig. 2** illustriert. Um einen definierten NOx-Pumpstrom > 0 zu simulieren, wird die Nernstspannung (VS) von beispielsweise 425 mV auf 225 mV gesenkt. Dadurch wird ein kleiner Anteil der O₂-Moleküle aus dem Abgas nicht mehr an der Sauerstoffpumpzelle 18 abgepumpt, sondern gelangt durch die zweite Diffusionsbarriere 15 bis zur NOx-Pumpelektrode 22. Nach einigen Sekunden hat sich ein stabiler NOx-Pumpstrom eingestellt, der in diesem Beispiel etwa 300 ppm entspricht. Das NOx-Signal wird über einige Sekunden integriert, sodass das Ergebnis ein Integralwert ist. Anschließend wird die Nernstspannung wieder auf 425 mV erhöht, und der Sensor kehrt in den normalen Betriebsmodus zurück, wobei nach einer kurzen Wartezeit das NOx-Signal wieder freigegeben wird. Bei einer anfänglichen Kalibrierung des Systems (Neuteil) wird üblicherweise der gemessene Integralwert als Referenzwert abgespeichert, sodass der im späteren Betrieb messbare Integralwert mit diesem Referenzwert verglichen werden kann.

**Fig. 3** illustriert den Signalverlauf bei der Eigendiagnose gemäß dem erfindungsgemäßen Verfahren, wobei nicht das Integral des NOx-Signals nach der Absenkung der Nernstspannung betrachtet wird, sondern der zeitliche Verlauf des resultierenden Pumpstroms, um auf eine gegebenenfalls beeinträchtigte Dynamik des NOx-Sensors schließen zu können. Das dargestellte NO/O₂-Signal resultiert aus der durchgeführten Eigendiagnose, vergleichbar mit dem anhand der Fig. 2 illustrierten Verfahren. In Fig. 3 ist ein Signalverlauf 300 dargestellt, der bei einem NOx-Sensor zu erwarten ist, der in Ordnung ist. Weiterhin ist ein Signalverlauf 400 dargestellt, der auf einen Sensor rückschließen lässt, der nicht in Ordnung ist. Der Anstieg und Abfall des Signals 300 ist wesentlich steiler als bei dem Signal 400. Erfindungsgemäß wird der dynamische Verlauf des jeweiligen Signals ausgewertet, beispielsweise anhand eines Gradienten des Signalverlaufs. Es kann beispielsweise ein Wert ermittelt werden, der den Gradienten bei dem ansteigenden Pumpstrom oder den Gradienten bei dem nach Erhöhung der Nernstspannung wieder abfallenden Pumpstrom repräsentiert. Der jeweilige Wert kann mit einem geeigneten Referenzwert oder Erwartungswert verglichen werden, sodass auf eine gegebenenfalls vorhandene beeinträchtigte Dynamik, wie bei dem Signalverlauf 400, geschlossen werden kann. Hierdurch kann insbesondere eine Schädigung an der NOx-Pumpelektrode (vergiftete Elektrode) und/oder an einer Diffusionsbarriere (versottete NOx-Diffusionsbarriere) innerhalb des NOx-Sensors festgestellt werden. Wird zum Beispiel während des Betriebs die NOx-Pumpelektrode aufgrund einer Vergiftung stark geschädigt, verzögert sich die Reaktion an der NOx-Pumpzelle, sodass dies durch eine Auswertung des Gradienten während der Eigendiagnose erkannt werden kann. Eine Bewertung des Signalgradienten kann dabei in beide Richtungen erfolgen. Zum einen kann der Gradient während eines Anstiegs des Pumpstroms, der während der Absenkung der Nernstspannung (zu Beginn der Eigendiagnose) auftritt, ausgewertet werden. Zum anderen kann der Gradient bei dem Abfall des Pumpstroms infolge der Erhöhung der Nernstspannung (Ende der Eigendiagnose) ausgewertet werden.

Das erfindungsgemäße Verfahren ist nicht auf solche NOx-Sensoren beschränkt, wie sie schematisch in der Fig. 1 dargestellt sind. Vielmehr kann das erfindungsgemäße Verfahren auch bei anderen NOx-Sensoren eingesetzt werden, bei denen eine Eigendiagnose durch Flutung mit Sauerstoff durchgeführt wird.

## Patentansprüche

1. Verfahren zur Überwachung eines NOx-Sensors (10) mit einem sauerstoffionenleitenden Festelektrolyten und wenigsten einem Hohlraum (12) und mit Pumpelektroden (16, 17) und wenigstens einer NOx-Pumpelektrode (22), **dadurch gekennzeichnet, dass** während einer Eigendiagnose des NOx-Sensors, bei der ein Hohlraum (12) als Messkammer des NOx-Sensors mit einer definierten Sauerstoffkonzentration geflutet wird, der zeitliche Verlauf eines resultierenden NOx-Pumpstroms (300, 400) ausgewertet wird, wobei wenigstens eine Größe, die den zeitlichen Verlauf des resultierenden NOx-Pumpstroms (300, 400) repräsentiert, ausgewertet wird und bei einer Abweichung im Vergleich mit Referenzwerten auf eine beeinträchtigte Dynamik des NOx-Sensors (10) geschlossen wird, wobei der zeitliche Verlauf anhand einer Größe, die den Gradienten bei einem ansteigenden NOx-Pumpstrom (300, 400) während der Eigendiagnose repräsentiert, ausgewertet wird und/oder der zeitliche Verlauf anhand einer Größe, die den Gradienten bei einem abfallenden NOx-Pumpstrom (300, 400) während der Eigendiagnose repräsentiert, ausgewertet wird.

2. Verfahren nach Anspruch 1, **dadurch gekennzeichnet, dass** bei einer beeinträchtigten Dynamik des NOx-Sensors (10) auf eine vergiftete NOx-Pumpelektrode (22) in dem NOx-Sensor und/oder auf eine versottete NOx-Diffusionsbarriere (15) in dem NOx-Sensor geschlossen wird.

3. Verfahren nach Anspruch 1 oder Anspruch 2, **dadurch gekennzeichnet, dass** der NOx-Sensor (10) zur Anordnung in dem Abgasstrang einer Brennkraftmaschine eines Kraftfahrzeugs vorgesehen ist, wobei vorzugsweise der NOx-Sensor stromabwärts eines der Brennkraftmaschine zugeordneten Turboladers und/oder stromabwärts eines Stickoxid-Speicherkatalysators und/oder stromabwärts eines Dieselpartikelfilters und/oder stromaufwärts eines SCR-Katalysators und/oder stromabwärts eines SCR-Katalysators angeordnet ist.

4. Elektronisches Steuergerät, das eingerichtet ist, die Schritte eines Verfahrens gemäß einem der Ansprüche 1 bis 3 durchzuführen.

5. Computerprogramm, das eingerichtet ist, mit einem elektronischen Steuergerät gemäß Anspruch 4 die Schritte eines Verfahrens gemäß einem der Ansprüche 1 bis 3 durchzuführen.

6. Maschinenlesbares Speichermedium, auf welchem ein Computerprogramm nach Anspruch 5 gespeichert ist.

## Claims

1. Method for monitoring an NOx sensor (10) with an oxygen-ion-conducting solid electrolyte and at least one cavity (12) and with pump electrodes (16, 17) and at least one NOx pump electrode (22), **characterized in that** during a self-diagnosis of the NOx sensor, in which a cavity (12) as a measurement chamber of the NOx sensor is flooded with a defined oxygen concentration, the time profile of a resulting NOx pump current (300, 400) is evaluated, wherein at least one variable that represents the time profile of the resulting NOx pump current (300, 400), is evaluated and, in the event of a deviation in comparison with reference values, it is inferred that the dynamic range of the NOx sensor (10) is impaired, wherein the time profile is evaluated using a variable that represents the gradient for an increasing NOx pump current (300, 400) during the self-diagnosis and/or the time profile is evaluated using a variable that represents the gradient for a decreasing NOx pump current (300, 400) during the self-diagnosis.

2. Method according to Claim 1, **characterized in that** in the event of the dynamic range of the NOx sensor (10) being impaired, it is inferred that an NOx pump electrode (22) in the NOx sensor is poisoned and/or an NOx diffusion barrier (15) in the NOx sensor is clogged.

3. Method according to Claim 1 or Claim 2, **characterized in that** the NOx sensor (10) is provided to be arranged in the exhaust system of an internal combustion engine of a motor vehicle, wherein preferably the NOx sensor is arranged downstream of a turbocharger associated with the internal combustion engine and/or downstream of a nitrogen oxide storage catalytic converter and/or downstream of a diesel particle filter and/or upstream of an SCR catalytic converter and/or downstream of an SCR catalytic converter.

4. Electronic control unit configured to carry out the steps of a method according to one of Claims 1 to 3.

5. Computer program configured to carry out the steps of a method according to one of Claims 1 to 3 by means of an electronic control unit according to Claim 4.

6. Machine-readable storage medium in which a computer program according to Claim 5 is stored.

## Revendications

1. Procédé de surveillance d'un capteur de NOx (10) comprenant un électrolyte solide conducteur d'ions oxygène et au moins une cavité (12) et des électrodes de pompe (16, 17) et au moins une électrode de pompe à NOx (22), **caractérisé en ce que**, lors d'un autodiagnostic du capteur de NOx pendant lequel une cavité (12) utilisée comme chambre de mesure du capteur de NOx est inondée avec une concentration d'oxygène définie, la variation dans le temps d'un courant de pompe à NOx résultant (300, 400) est évaluée, au moins une grandeur étant évaluée qui représente la variation dans le temps du courant de pompe à NOx résultant (300, 400) et, en cas d'écart par rapport à des valeurs de référence, la conclusion étant qu'une dynamique du capteur de NOx (10) est altérée, la variation dans le temps étant évaluée à l'aide d'une grandeur qui représente le gradient lorsque le courant de pompe à NOx (300, 400) augmente pendant l'autodiagnostic et/ou la variation dans le temps étant évaluée à l'aide d'une grandeur qui représente le gradient lorsque le courant de pompe à NOx diminue (300, 400) pendant l'autodiagnostic.

2. Procédé selon la revendication 1, **caractérisé en ce que**, lorsque la dynamique du capteur de NOx (10) est altérée, la conclusion est qu'une électrode de pompe à NOx (22) dans le capteur de NOx est contaminée et/ou qu'une barrière de diffusion de NOx (15) dans le capteur NOx est encrassée.

3. Procédé selon la revendication 1 ou la revendication 2, **caractérisé en ce que** le capteur de NOx (10) est prévu pour être disposé dans la ligne de gas d'échappement d'un moteur à combustion interne d'un véhicule automobile, le capteur de NOx étant de préférence disposé en aval d'un turbocompresseur associé au moteur à combustion interne et/ou en aval d'un catalyseur à stockage d'oxyde d'azote et/ou en aval d'un filtre à particules diesel et/ou en amont d'un catalyseur SCR et/ou en aval d'un catalyseur SCR.

4. Appareil de commande électronique qui est conçu pour mettre en œuvre les étapes d'un procédé selon l'une des revendications 1 à 3.

5. Logiciel qui est conçu pour mettre en œuvre les étapes d'un procédé selon l'une des revendications 1 à 3 avec un appareil de commande électronique selon la revendication 4.

6. Support de stockage lisible par machine sur lequel est stocké un logiciel selon la revendication 5.
